# EUROPEAN PATENT SPECIFICATION

(11) **EP 3 064 475 B1**
(45) Date of publication and mention of the grant of the patent: **03.10.2018**
(21) Application number: 14858689.4
(22) Date of filing: 24.10.2014
(51) Int. Cl.: C02F 1/02, C02F 1/58, C02F 101/38, C02F 103/36

(54) **METHOD FOR TREATING WASTEWATER FROM MELAMINE PRODUCTION**
VERFAHREN ZUR BEHANDLUNG VON ABWASSER AUS EINER MELAMINHERSTELLUNG
PROCÉDÉ DE PURIFICATION D'EAUX USÉES ISSUES DE LA PRODUCTION DE MÉLAMINE

(30) Priority: 28.10.2013 RU 2013147975
(43) Date of publication of application: 07.09.2016
(73) Proprietor: Otkrytoe Aktsionernoe Obschestvo Research & Design Institute Of Urea And Organic Synthesis Products (OAO NIIK), Nizhny Novgorod Region 606008 (RU)
(72) Inventor: NIKOLAEV, Evgeny Yuryevich, g. Dzerzhinsk Nizhny Novgorod region 606037 (RU); SKUDIN, Aleksei Georgievich, g. Dzerzhinsk Nizhny Novgorod region 606009 (RU); PECHNIKOVA, Galina Nikolaevna, Dubki Village Nizhny Novgorod region 606070 (RU); SHISHINOV, Aleksandr Vasilyevich, g. Dzerzhinsk Nizhny Novgorod region 606024 (RU); KUZNETSOV, Nikolai Mikhailovich, g. Dzerzhinsk Nizhny Novgorod region 606000 (RU); KOSTIN, Oleg Nikolaevich, g. Nizhny Novgorod 603010 (RU); ESIN, Igor Veniaminovich, g. Dzerzhinsk Nizhny Novgorod region 606000 (RU)
(74) Representative: Vossius & Partner Patentanwälte Rechtsanwälte mbB
(86) International application number: PCT/RU2014/000805
(87) International publication number: WO 2015/065247

(56) References cited:
- WO-A1-2004/000733
- WO-A1-2011/042532
- RU-C2- 2 400 431
- SU-A1- 345 103
- US-A1- 2009 294 272
- US-B2- 7 445 722

## Description

### Field of the Invention

The invention relates to methods of purifying wastewater formed during manufacturing of the melamine produced from urea by technologies applying alkali metal hydroxides water solutions for melamine purification and separation. More specifically, this invention relates to a process for purifying wastewater by thermal hydrolysis of impurities dissolved in the wastewater, which are formed during melamine synthesis and separation.

### Background of the Invention

After synthesis unpurified melamine is treated and separated with aqueous solutions. Impurities are transferred into aqueous phase and fed to treatment with a wastewater. Wastewater is mainly represented by mother liquor removed from melamine crystallization stage.

The mentioned impurities dissolved in the wastewater include triazine derivatives such as residual melamine, ammeline, ammelide, cyanuric acid, melam, melem, ureidomelamine and their salts. Wastewater may contain acyclic nitrogen compounds, for example, feedstock urea, hydroxides and alkali metals carbonates, for example, sodium carbonate.

Treatment of wastewater prior to discharging into the sewers should be provided in order to ensure residual content of impurities in the treated wastewater below maximum permissible levels and concentrations. Impurities concentration level is regulated in accordance with each country's local laws. There are no standards accepted worldwide. Current requirements on impurities content in melamine plant wastewater are being tightened. As a benchmark, 1 mg of triazine derivatives per 1 liter of wastewater can be accepted as maximum allowable limit.

Techniques that involve the use of aqueous solutions of alkali metal hydroxides in order to purify and separate melamine are characterized by high consumption of pure water in the process and large amounts of produced wastewater. The main process of purifying melamine production wastewater is a thermal hydrolysis of the wastewater at high temperatures (up to 300°C) and pressures causing decomposition of impurities to ammonia and carbon dioxide.

The hydrolysis of urea proceeds at relatively low temperatures, so there is no problem with removal urea from the wastewater. Purifying wastewater from triazine derivatives causes great difficulty as their hydrolysis occurs at higher temperatures.

In order to solve the above-mentioned problems in melamine production there is described a range of methods for wastewater purifying .

A process for purifying wastewater from melamine production is known by comprising thermal hydrolysis of previously concentrated wastewater (WO2009007813, C07D 251/62, C07B 63/00, 2009). The concentration of wastewater is carried out on an ultrafiltration unit. 65-75% of filtrate is recycled into melamine production. The remaining 25-35% of wastewater which didn't pass through wastewater filters is subjected to thermal hydrolyses at a temperature of 270-300° for 1-10 hours. The ultrafiltration provides a sufficiently high level of purification of wastewater containing ammeline and the possibility to recycle the large amount of wastewater as filtrate. It results in decreased amounts of treated wastewater discharged into the sewers and simultaneously reduces the consumption of pure water in the process.

However the use of ultrafiltration stage makes the process more complicated and expensive because of additional energy required for pump operation. The frequent replacement or regeneration of filters is also required. Furthermore the ultrafiltration do not purify wastewater from carbonate or sodium bicarbonate, thus, the described purification method is applicable only to melamine production technologies when melamine is treated and separated using ammonia as aqueous solution without alkali metal hydroxides.

From the technical point of view, the method that is the closest to the proposed one is a known method of purifying wastewater formed during manufacturing of melamine from urea by two-stage treatment including the stage of pre-treatment at a temperature of 140-250°C, preferably at 180-220°C with decomposition of acyclic nitrogen compounds contained in wastewater to the amount of less than 1% after previous thermal treatment, preferably less than 0.5% and continuous evaporation of at least 15%, preferably at least 50% of wastewater to obtain gaseous phase containing ammonia, carbon dioxide and water, and liquid phase containing triazine derivatives followed by condensation of the received gaseous phase, removing ammonia and carbon dioxide from condensate by water steam distillation and recycling of treated condensate into melamine production and the stage of thermal hydrolyses of the obtained liquid stage at a temperature of 200-260°C followed by removal of ammonia from the liquid stage obtained at the thermal hydrolyses stage by water steam distillation (RU 2400431, US2009/0294272A1).

During wastewater hydrolysis the main part of gaseous phase is formed by urea decomposition. Thus, the increased amount of urea in wastewater in unstable operating conditions for example during start up or shut down results in formation of large amount of gaseous phase in the treatment unit which doesn't allow to support continuous and safe mode of operation.

As described in the patent specification the stage of previous thermal treatment is intended to proceed decomposition of urea and other acyclic nitrogen compounds present in wastewater to their residual content in an amount of less than 1%, preferably less than 0.5% in a liquid phase and removing of ammonia and carbon dioxide formed in large amounts to provide safe and continuous operation of hydrolyser at thermal hydrolysis stage.

Simultaneously with decomposition of acyclic nitrogen compounds during previous thermal treatment an evaporation of at least 15% preferably 50% of wastewater occurs. Gaseous phase containing ammonia, carbon dioxide and water is continuously removed and condensed. Ammonia and carbon dioxide are removed from condensate preferably by water steam distillation. The clear water obtained as a result can be returned to melamine unit as technological condensate. Recycle of the sufficient amount of water into the process reduces the amount of treated wastewater discharged into the sewers and at the same time decreases the consumption of pure water in the process.

Due to the fact that previous thermal treatment is intended to decompose only urea and other acyclic nitrogen compounds present in the wastewater with continuous evaporation of large amounts of water and gas phase removal, it proceeds at lower temperatures than the second stage. Only minor part of triazine derivatives may decompose under present conditions. The liquid phase formed at the stage of previous thermal treatment contains only hard-to-decompose triazine derivatives. This liquid phase is fed to thermal hydrolysis stage.

This method has the following disadvantages. Recycling of a part of wastewater as purified condensate into the process requires evaporation of significant amount of wastewater, which means additional energy involved into the process and thus additional stages for condensation of evaporated water and separation of ammonia and carbon dioxide from condensate by steam distillation which makes the process more complicated. Due to the fact that the formed liquid phase contains a major amount of hard-to-decompose triazine derivative, the stage of thermal hydrolysis involving decomposition of triazine derivatives to sanitary standards levels also requires high consumption of energy resources.

### Summary of the Invention

The technical task of the proposed invention is an improved method of wastewater treatment of melamine production plant.

The technical result that can be achieved by invention is increased level of purification of wastewater discharged into the sewers, reduced amount of treated wastewater discharged into the sewers, reduced consumption of pure water in the process along with process technology simplifying and energy consumption reduction.

To achieve technical result, a process of treatment wastewater formed during the process of production of melamine from urea by means of two stage wastewater treatment is provided, as described in claim 1. It includes thermal hydrolysis of wastewater characterized by the following: thermal hydrolysis of the first stage is performed at a temperature of 180-270°C to decomposition of 95.0-99.9% triazine derivatives present in a wastewater; the water treated at the first stage at the amount of 20-80% is recycled into the process. The final thermal hydrolysis of the other part of wastewater treated at the first stage is performed at a temperature of 180-270°C.

The distinctive features of the claimed method from the closest prior art are the following:
- at the first stage the basic thermal hydrolysis occurs at a temperature of 180-270°C to decomposition of 95.0-99.9% of triazine derivatives present in a wastewater;
- the water treated at the first stage at the amount of 20-80% is recycled into the process;
- at the second stage the final thermal hydrolysis of the other part of wastewater treated at the first stage is performed at a temperature of 180-270°C.

The first two distinctive features characterize the proposed recycling process of the part of wastewater presented in the form of a partly hydrolyzed water as less energy consuming than the recycling of the part of wastewater in the form of treated condensate described in the prior art. The use of this recycle does not require additional treatment stage which makes the process more complicated.

Break down of wastewater thermal hydrolyses operation into two stages is used in such a manner that only the remaining part of the wastewater treated during the first stage containing insignificant amount of non-decomposed triazine derivatives (0.1-5.0% of their initial concentration in unpurified wastewater) is fed to the final stage of thermal hydrolyses. It results in reduced energy consumption required to ensure acceptable levels of residual content of triazine derivatives in treated wastewater.

All the three distinctive features are not disclosed in the prior art, thus, the claimed technical results-simplification of the technique and reduced energy costs do not clearly follow from the prior art.

It is known the process of recycling of up to 80% of wastewater formed during melamine manufacturing (WO 2011042532, C07D 251/60, 2011). However, this wastewater is treated not at the first stage of thermal hydrolysis but during one-stage thermal hydrolysis where the concentration of triazine derivatives in a treated wastewater is reduced to sanitary level. Thus, this method does not disclose the second feature.

Treatment of the wastewater of the main thermal hydrolysis at a temperature of 180-270°C to decomposition of 95.0-99.9% of triazine derivatives and recycling of 20-80% of treated wastewater into the process during the first stage can reduce the amount of treated wastewater discharged into the sewers and at the same time reduces the consumption of pure water in the process. The proposed method allows a high level of purification of wastewater discharged into the sewers, wherein the total content of triazine derivatives in the wastewater is not more than 1 mg per 1 liter of wastewater.

### Description of the Preferred Embodiments

The invention is illustrated by the following examples related to a process for purifying wastewater formed during manufacturing of melamine from urea which involves the use of aqueous solution of sodium hydroxide in order to purify and separate melamine. The wastewater represents a mother liquid removed from melamine crystallization stage.

### Example 1.

Two-stage thermal hydrolysis of the wastewater with the following content is performed:

| | |
|---|---|
| Urea | 0.2% |
| Melamine | 0.3% |
| Oxy-amintriazines ¹⁾ | 0.8% |
| Condensation products ²⁾ | 0.2% |
| Sodium carbonate | 0.15% |
| Sodium hydroxide | 0.2% |
| Water | the rest |

| | |
|---|---|
| ¹⁾ Mixture of sodium salts of ammeline (basic component), ammelide and cyanuric acid; ²⁾ Mixture of melem derivatives (sodium salts of cyamelluric acid and its mono- and diamides - basic component) with melam. | |

Wastewater is kept in the unit of the main thermal hydrolysis at a temperature of 230°C for 1 hour, and the resulting gaseous phase in an amount of approximately 8% containing water, ammonia and carbon dioxide is fed to condensation. The total content of triazine derivatives in the treated water is 65 mg per 1 liter, which corresponds to the impurities decomposition level of 99.5%. Treated wastewater is separated into two flows in a 80:20 ratio. The major part of water representing 80% is recycled into the process prior to melamine crystallization stage and a smaller portion is directed to the final stage of the thermal hydrolysis which is carried out at a temperature of 270°C for 0.5 hours. After removal of ammonia and carbon dioxide from the wastewater treated at the final stage of thermal hydrolysis the content of impurities does not exceed 1 mg per 1 liter. Further treatment is performed with the part of wastewater treated at the stage of the main thermal hydrolysis managing the ratio between the recycled and discharged water flows to maintain sodium carbonate concentration in the treated wastewater at 5% level. The sodium carbonate concentration does not affect hydrolysis efficiency and melamine quality. The amount of pure water used in the process and the amount of treated water discharged into the sewers is reduced by 5 times.

### Example 2.

As with example 1 wastewater is kept in the unit of the main thermal hydrolysis at a temperature of 240°C for 1.25 hour, and the resulting gaseous phase in the amount of approximately 6% containing water, ammonia and carbon dioxide is fed to condensation. The total content of triazine derivatives in the treated water is equal to 13 mg per 1liter, which corresponds to impurities decomposition level of 99.9%. Treated waste water is separated into two flows in a 70:30 ratio. The major part of the water representing 70% is recycled into the process prior to the melamine crystallization stage and a smaller portion is directed to the final stage of the thermal hydrolysis which is carried out at a temperature of 240°C for 1.5 hours. After removal of ammonia and carbon dioxide from the waste water treated at the final stage of thermal hydrolysis the content of impurities does not exceed 1 mg per 1liter. Further treatment is performed with the part of wastewater treated at the stage of main thermal hydrolysis maintaining sodium carbonate concentration in the treated waste water at 4% level. The amount of pure water used in the process and the amount of treated water discharged into sewers is reduced by 4 times.

### Example 3.

Wastewater with concentration of impurities as with example 1 is kept in the unit of the main thermal hydrolysis at a temperature of 270°C for 0.5 hour, and the resulting gaseous phase in the amount of approximately 7% containing water, ammonia and carbon dioxide is fed to condensation. The total content of triazine derivatives in the treated water is equal to 130 mg per 1liter, which corresponds to impurities decomposition level of 99.0%. Treated waste water is separated into two flows in a 40:60 ratio. The minor part of the water representing 40% is recycled into the process prior to melamine crystallization stage and a major portion is directed to the final stage of the thermal hydrolysis which is carried out at a temperature of 180°C for 4 hours. After removal of ammonia and carbon dioxide from the wastewater treated at the final stage of thermal hydrolysis the content of impurities does not exceed 1 mg per 1liter. Further treatment is performed with a part of wastewater treated at the first stage of thermal hydrolysis maintaining sodium carbonate concentration in the treated wastewater at 4.5% level. The amount of pure water used in the process and the amount of treated water discharged into sewers is reduced by 4.5 times.

### Example 4.

Wastewater with concentration of impurities as with example 1 is kept in the unit of the main thermal hydrolysis at a temperature of 180°C for 4 hours, and the resulting gaseous phase in the amount of approximately 7% containing water, ammonia and carbon dioxide is fed to condensation. The total content of triazine derivatives in the treated water is 650 mg per 1liter, which corresponds to impurities decomposition level of 95.0%. Treated waste water is separated into two flows in a 20:80 ratio. The minor part of the water representing 20% is recycled into the process prior the melamine crystallization stage and a major portion is directed to the final stage of the thermal hydrolysis which is carried out at a temperature of 220°C for 2 hours. After removal of ammonia and carbon dioxide from the wastewater treated at the final stage of thermal hydrolysis the content of impurities does not exceed 1 mg per 1liter. Further treatment is performed with a part of wastewater treated at the first stage of thermal hydrolysis maintainingsodium carbonate concentration in the treated wastewater at 4% level. The amount of pure water used in the process and the amount of treated water discharged into sewers is reduced by 4 times.

### Industrial applicability

The invention may be used in the industrial melamine production process.

## Claims

1. A process for purifying wastewater formed during the process of producing melamine from urea by technologies applying alkali metal hydroxides water solutions for melamine purification and separation by means of two stage wastewater treatment including thermal hydrolysis of wastewater **characterized in that** the main thermal hydrolysis is performed at the first stage at a temperature of 180 to 270°C to degrade 95.0 to 99.9% of triazine derivatives present in the wastewater, the water treated at the first stage is recycled at the amount of 20 to 80% into the process of producing melamine; and the final thermal hydrolysis of the other part of the wastewater treated at the first stage is performed at the second stage at a temperature of 180 to 270°C.

## Patentansprüche

1. Ein Verfahren zur Reinigung von Abwasser, das während des Verfahrens zur Herstellung von Melamin aus Harnstoff entstanden ist, durch Technologien, die Alkalimetallhydroxide-Wasserlösungen für die Reinigung und Abtrennung von Melamin verwenden, mittels einer zweistufigen Abwasserbehandlung, enthaltend thermische Hydrolyse von Abwasser, **dadurch gekennzeichnet, dass** die thermische Haupthydrolyse in der ersten Stufe bei einer Temperatur von 180 bis 270°C durchgeführt wird, um 95,0 bis 99,9% der Triazin-Derivate, die im Abwasser vorhanden sind, abzubauen, wobei das in der ersten Stufe behandelte Wasser zu 20 bis 80% in das Verfahren zur Herstellung von Melamin zurückgeführt wird; und wobei die thermische Endhydrolyse des anderen Teils des in der ersten Stufe behandelten Abwassers in der zweiten Stufe bei einer Temperatur von 180 bis 270°C durchgeführt wird.

## Revendications

1. Procédé de purification d'eau usée formée lors du procédé de production de mélamine à partir d'urée grâce aux technologies appliquant des solutions aqueuses d'hydroxydes de métaux alcalins pour la purification de mélamine et la séparation grâce une traitement d'eau usée en deux étapes comportant une hydrolyse thermale de l'eau usée, **caractérisé en ce que** l'hydrolyse thermale principale est réalisée à la première étape à une température de 180 à 270°C pour dégrader 95.0 à 99.9% des dérivés de triazine présents dans l'eau usée, l'eau traitée à la première étape est recyclée à hauteur de 20 à 80% dans le procédé de production de mélamine ; et l'hydrolyse thermale finale de l'autre partie de l'eau usée traitée à la première étape est réalisée à la seconde étape à une température de 180 à 270°C.
